# EUROPEAN PATENT APPLICATION

(11) **EP 2 166 437 A2**
(43) Date of publication of application: **24.03.2010**
(21) Application number: 09170457.7
(22) Date of filing: 16.09.2009
(51) Int. Cl.: G06F 3/048

(54) **Method and appress for controlling multitasking operations of a mobile terminal having a touchscreen**

(30) Priority: 18.09.2008 KR 20080091640
(71) Applicant: Samsung Electronics Co., Ltd., Suwon-si, Gyeonggi-do (KR)
(72) Inventor: Seo, Kem Suk, Suwon-si, Gyeonggi-do (KR)
(74) Representative: Ketelaars, Maarten F.J.M.

(57) **Abstract**

A method and apparatus is provided for controlling the multitasking operations of a mobile terminal having at least one touchscreen based on the input signals corresponding to touch events detected on the touchscreen. A method for controlling multitasking operations of a mobile terminal having at least one touchscreen according to the present invention executes an application in response to a user request while at least one other applications is running, displays an execution window of an application selected from the currently running applications in an auxiliary screen in response to a touch event detected on the touchscreen, and displays the execution screens of the applications running concurrently, except for the application whose execution window is displayed in the auxiliary screen, in a main screen, accumulatively.

## Description

### BACKGROUND OF THE INVENTION

### Field of the Invention

The present invention relates to a mobile terminal and, in particular, to a method and apparatus for controlling the multitasking operations of a mobile terminal having at least one touchscreen based on the input singles corresponding to touch events detected on the touchscreen.

### Description of the Related Art

With the rapid development of mobile communication and information processing technologies, mobile communication terminals, such as mobile cellular phones, are becoming multifunctional devices. For instance, the recent mobile terminals are configured to support various supplementary functions such as text messaging, e-mail, video playback, wireless Internet access, gaming, and Digital Multimedia Broadcasting (DMB) functions. With the reinforcement of such multimedia functions, the display devices of mobile terminals have been developed in order to meet the needs of modern users' sensitive to the visual information.

Typically, a mobile terminal equipped with multiple display devices supports multitasking, which allows multiple applications installed on the mobile terminal to run simultaneously, with the support of multiprocessor or software. When the multiple applications run in multitasking environments, the application data are displayed on a single main display device in whole or on a main and an auxiliary devices, in parts.

### SUMMARY OF THE INVENTION

The present invention provides a method and apparatus for controlling a multitasking operation a mobile terminal having two touchscreen-enabled display devices that are capable of interactively controlling operations of multiple applications running in the multitasking environment using the touchscreen-enabled display devices.

Also, the present invention provides a method and apparatus for controlling a multitasking operation of the mobile terminal having a touchscreen that is capable of interactively controlling the operations of the multiple applications running in the multitasking environment with the intuitive touch behaviors on the touchscreen.

In accordance with an exemplary embodiment of the present invention, a method for controlling multitasking operations of a mobile terminal having at least one touchscreen includes executing an application in response to a user request while at least one other application is running; displaying an execution window of an application selected from the currently running applications in an auxiliary screen in response to a touch event detected on the touchscreen; and displaying the execution screens of the applications running concurrently, except for the application of which execution window is displayed in the auxiliary screen, in a main screen accumulatively.

In accordance with another exemplary embodiment of the present invention, an apparatus for controlling multitasking operations of a mobile terminal having at least one touchscreen includes a display unit which provides at least one touchscreen for displaying execution windows of multiple applications running concurrently and a control unit which controls the display unit to define a main screen for displaying execution windows of the multiple applications except for the most recently activated application and an auxiliary screen for displaying an execution window of the most recently activated application in response to a touch event detected on the touchscreen.

### BRIEF DESCRIPTION OF THE DRAWINGS

The above features and advantages of the present invention will be more apparent from the following detailed description in conjunction with the accompanying drawings, in which:
FIG. 1 is a block diagram illustrating a configuration of a mobile terminal according to an exemplary embodiment of the present invention;
FIGs. 2A to 2K are diagrams illustrating display operations of a mobile terminal having two touchscreens in response to touch signals in multitasking environment according to an exemplary embodiment of the present invention;
FIGs. 3A to 3I are diagrams illustrating display operations of a mobile terminal having a single touchscreen in response to touch signals in multitasking environment according to an exemplary embodiment of the present invention;
FIG. 4 is a flowchart illustrating a method for controlling display operations of a touchscreen-enabled mobile terminal operating in a multitasking environment in response to touch events detected on the touchscreen;
FIG 5 is a flowchart illustrating a method for controlling display operations of a mobile terminal having dual touchscreens in response to a touch signal input through the touchscreens according to an exemplary embodiment of the present invention; and
FIG. 6 is a flowchart illustrating a method for controlling display operations of a mobile terminal having a touchscreen in response to a touch signal input through the touchscreen according to another embodiment of the present invention.

### DETAILED DESCRIPTION OF THE INVENTION

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

In an exemplary embodiment of the present invention, the mobile terminal can be any of cellular communication terminals (including a Code Division Multiple Access (CDMA) terminal, a Wideband CDMA (WCDMA) terminal, a Global System for Mobile communications (GSM) terminal, a General Packet Radio Service (GPRS) terminal, a Universal Mobile Telecommunication System (UMTS) terminal, etc.), a Personal Digital Assistant (PDA), a smart phone, and their equivalent devices, equipped at least one touchscreen-enabled display.

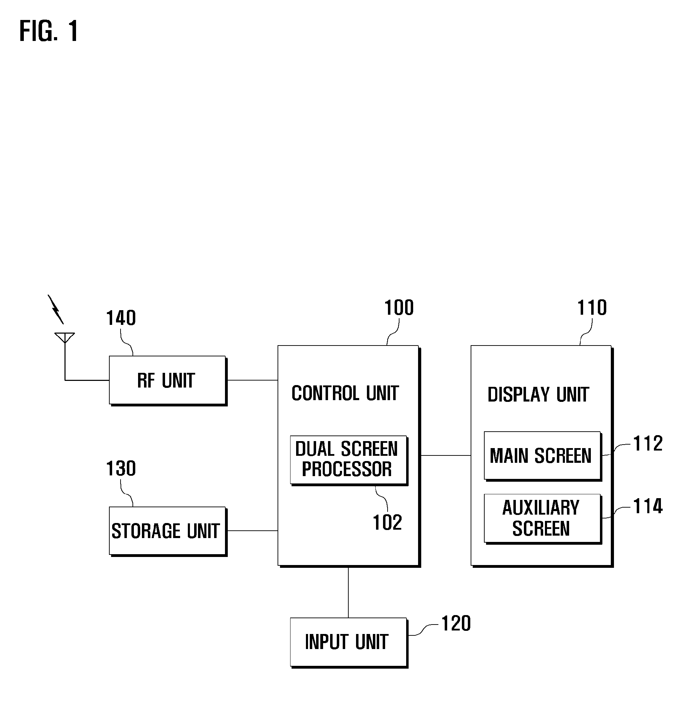

FIG. 1 is a block diagram illustrating a configuration of a mobile terminal according to an exemplary embodiment of the present invention.

Referring to FIG. 1, the mobile terminal according to an exemplary embodiment of the present invention includes a control unit 100, a display unit 110, an input unit 120, a storage unit 130, and a Radio Frequency (RF) unit 140. The control unit 110 includes a dual screen processor 102, and the display unit 110 includes a main screen 112 and an auxiliary screen 114.

The display unit 110 displays information on the operation status and results and settings of the mobile terminal. The display unit 110 also provides the user with the menu of the mobile terminal, user data input by the user, function settings, and other optional information in the form of visual images. The display unit 110 can be implemented with a Liquid Crystal Display (LCD) or Organic Light Emitting Diodes (OLED). Particularly in an exemplary embodiment of the present invention, the display unit 110 is equipped with a touchscreen panel. In this case, the display unit 110 can work as a part of the input unit 120. In an exemplary embodiment of the present invention, the display unit 110 generates an electric voltage or an electric current signal corresponding to a contact point on the touchscreen panel such that the user can input a command or graphic information. A touchscreen is implemented with multiple laminated layers of a touch panel, a liquid crystal panel, and backlight. The touch screen also includes signal lines for delivering signals generated on the touch panel and Tape Carrier Package connected to the lower substrate of the liquid crystal panel for supplying electric signals to a liquid crystal panel driver. In an exemplary embodiment of the present invention, the display unit 110 displays an application execution window on the main screen 112 in response to a user command. Although it is mentioned that the application is executed in response to a user request in an exemplary embodiment of the present invention, it is not limited thereto but may be executed by an external application execution request signal. For instance, the application can be activated in response to an event such as a receipt of incoming message or incoming call. When multiple applications are running in a multitasking environment, the display unit 110 renders the windows of the previously activated applications in the background and displays the execution window of the most recently activated application in the foreground of the screen. In the case multiple applications are activated, the display unit 110 operates such that the previously activated applications are rendered in the background and the most recently activated application is displayed on the foreground of the screen.

The display unit 110 is provided with a main screen 112 that is primarily activated and an auxiliary screen 114. Here, the main screen 112 is responsible for displaying constant information related to the operations of the mobile terminal, and the auxiliary screen 114 works as a touch keypad at ordinary times and displays application execution windows in response to a touch input signal.

The display unit 110 also can be implemented such that a single touchscreen of the mobile terminal is divided into the main and auxiliary screens 112 and 114 in response to a touch signal input by the user when the mobile terminal operates in the multitasking environment.

The display unit 110 receives the touch signal input from the control unit 100 during the multitasking process for multiple applications. Although the touch signal is described representatively with a drag signal and a double click signal in an exemplary embodiment of the present invention, it is not limited thereto but may be various input signals. For instance, the recognizable touch signals can include a flick signal, a flit signal, a swing signal, and the like, as well as the drag and double click signals. If the control unit 100 transfers a drag signal corresponding to the drag touch detected on the touchscreen on which multiple applications are running concurrently in the multitasking environment to the display unit 110, the display unit 112 presents the movement of the execution window of one of the applications running from the main screen 112 to the auxiliary screen 114. Also, when a double click signal corresponding to the double click event detected on the touchscreen is received from the control unit 100, the display unit 110 renders the main screen 112 and the auxiliary screen 114 in a touchscreen mode. In this case, the application execution windows are displayed in size-reduced forms.

The main screen 112 is responsible for presenting the screens of the applications executed in response to a user request or an external request signal. When a new application is executed while the previously executed application is running (i.e. the mobile terminal operates in a multitasking environment), the main screen 112 displays the currently running application in the background as a previously running application. The multiple previously executed applications can, thus, run in the background.

When a drag signal is supplied to the display unit 110 in the multitasking environment, the display unit 110 operates such that the application execution window, displayed in the main screen 112, as a target of the drag signal moves to be displayed in the auxiliary screen 114.

The auxiliary screen 114 can be implemented as an independent screen of a separate display device or as a part of the screen of the display unit 110 (i.e., virtual display).

The auxiliary screen 114 presents the execution screen of an application that is supplied by the main screen 112. That is, the auxiliary screen 114 is configured to display at least one of the multiple application execution windows rendered in the main screen 112 by dragging the application execution window from the main screen 112 and dropping the application execution window in the auxiliary screen 114 in accordance with a drag signal.

The input unit 120 is provided with a plurality of alphanumeric keys for inputting alphabetic and numeric information and a plurality of function keys for setting diverse functions of the mobile terminal. The functions keys can include navigation keys, side keys, and shortcut keys. The input unit 120 can be implemented in combination with the touchscreen. In this case, the input unit 120 also works as a part of the display unit 110. The input unit 120 generates key signals corresponding to the inputs related to the user configurations and function controls of the mobile terminal. Particularly, the input unit 120 transfers touch signals corresponding to the touch events detected on the touchscreen to the control unit 110 in the multitasking environment. The touch signals can include a drag signal, a double click signal, a flick signal, a flit signal, and a swing signal. The touch signals can be selectively set by the user. For instance, the input unit 120 can be set to recognize the drag event for moving an application execution window across dual screens of the display unit 110 of the mobile terminal.

The storage unit 130 (e.g., memory) stores application programs required for performing the functions of the mobile terminal according to an exemplary embodiment of the present invention. The storage unit 130 includes a program region and a data region. The program region stores the Operating System (OS) for butting up the mobile terminal and a program associated with the multitasking for processing the multiple applications program concurrently. The data region stores the data generated while the mobile terminal is running the application programs and controls data input by the user for processing the multiple applications in the multitasking environment.

The RF unit 140 is responsible for establishing radio communication channel with a base station and processing signals to be transmitted and received from the base station. The RF unit 140 can include an RF transmitter for up-converting and amplifying the frequency of the transmission signal and an RF receiver for low noise amplifying and downconverting the received signal. Particularly, the RF unit 140 can be configured to establish radio channels with the base station for the cellular services such as the text messaging and a wireless Internet access point for data communication services.

The control unit 100 controls general operations of the mobile terminal and signaling among the internal function blocks. Particularly in an exemplary embodiment of the present invention, the control unit 100 controls the executions of a specific application in response to an execution request. The control unit 110 also controls operations such that multiple applications run concurrently and their execution screens are displayed in the screen of the display unit 110 in a multitasking environment. In the case multiple applications are running in a multitasking environment, the control unit 110 controls the display unit 110 to render the windows of the applications, except for the most recently activated application, in the background and the execution window of the most recently activated application in the foreground.

The control unit 100 controls such that the application execution windows are selectively displayed on the main screen 112 and the auxiliary screen 114 according to the touch signal input in the multitasking environment. The control unit 100 can identify the touch signals corresponding to the touch events such as drag, double click, flick, flit, and swing events detected on the touchscreen.

In the idle mode, the control unit 100 controls the display unit 110 to adjust the state of the auxiliary screen 114 according to the settings such as on/off times and brightness. The control unit 100 also can control the main screen 112 and the auxiliary screen 114 to operate in a default brightness mode.

The control unit 100 can identify the input signal for displaying a specific application execution window on the main screen 112 in the multitasking environment. In this case, the control unit 110 receives the input signal for selecting one of applications running in the multitasking environment and displays the window corresponding to the selected application on the main screen 112.

The control unit 100 can identify an input signal for displaying the execution window of one of the applications running in the multitasking environment on the auxiliary screen 114. If the input signal is detected, the control unit 100 selects an application indicated by the input signal and displays the execution window of the selected application on the auxiliary screen 114.

The control unit 100 can identify a drag signal corresponding to a drag touch detected on the multitasking execution screen. If the drag signal is detected, the control unit 100 controls operations of the screens such that the application execution window rendered on the main screen 112 is dragged to the auxiliary screen 114. That is, the control unit 100 controls the application execution window selected from the main screen 112 so that the selected application is transferred from the main screen 112 to the auxiliary screen 114 in accordance with the drag signal.

The control unit 100 can also identify the input signal for deactivating one of applications corresponding to the application execution windows displayed on the main screen 112 and the auxiliary screen 114. When the execution window of the target application indicated by the application deactivation signal is displayed on the main screen 112, the control unit 100 controls the operation such that the application execution window rendered on the main screen 112 is closed and the application execution window rendered on the auxiliary screen 114 moves onto the main screen 12.

When the execution window of a target application indicated by the application deactivation signal is displayed on the auxiliary screen 114, the control unit 100 controls the operation such that the application execution window rendered on the auxiliary screen 114 is closed.

The control unit 100 can also control the operation such that the positions of the application execution windows are switched between the main screen 112 and the auxiliary screen 114. Switching the positions of application execution windows can be performed in accordance with a drag touch detected on the auxiliary screen 114 such that, when the drag touch is detected on the auxiliary screen 114, the execution window of the main screen 112 moves onto the auxiliary screen 114 and the execution window of the auxiliary screen 114 moves onto the main screen 112.

The control unit 100 can also identify a double click signal corresponding to the double click touch detected on the multitasking execution screen. If a double click signal is detected, the control unit 100 controls operation of the display unit 110 to render the screen into the main screen 112 and the auxiliary screen 114 for displaying multiple application execution windows in accordance with the double click signal. That is, the control unit 100 reduces the sizes of the application execution windows of the applications running concurrently and arranges the reduced application execution windows on the main screen 112 and the auxiliary screen 114.

The control unit 100 can identify an input signal for selecting one of the applications running in the multitasking environment and displaying the execution window of the selected application on the main screen 112. The control unit 100 checks the application indicated by this signal and controls such that the execution window of the application is displayed on the main screen 112.

The control unit 100 can identify an input signal for selecting one of the applications running in the multitasking environment and displaying the execution window of the selected application on the auxiliary screen 114. The control unit 100 checks the application indicated by the signal and controls such that the execution window of the application is displayed on the auxiliary screen 114.

The control unit 100 can identify an input signal for terminating the execution of one of the applications corresponding to the application execution windows rendered in the main screen 112 and the auxiliary screen 114. When the execution window of the application indicated by the execution termination signal is rendered in the main screen 112, the control unit recovers the screen before splitting into the main and auxiliary screens 112 and 114, closes the application execution window rendered in the main window 112, and displays the application execution window rendered in the auxiliary screen 114 in the form of a full screen window.

When the execution window of the application indicated by the execution termination signal is rendered in the auxiliary screen 114, the control unit 100 closes the application execution window rendered in the auxiliary screen 114 and displays the application execution window rendered in the main screen 112 in the form of a full screen window.

In a mobile terminal having a single touchscreen according to an exemplary embodiment of the present invention, when the execution termination signal for terminating the application of which window is rendered in the auxiliary screen 114 is detected, the control unit 100 recovers the screen of the display unit 110 before splitting into the main and auxiliary screens 112 and 114 and displays the application execution window rendered in the main screen 112 in the form of a full screen window. When the execution termination signal for terminating the application of which window is rendered in the main screen 112 is detected, the control unit 100 recovers the screen of the display unit 110 before splitting into the main and auxiliary screens 112 and 114, closes the application execution window rendered in the main screen 112, and displays the application execution window rendered in the auxiliary screen 114 in the form of a full screen window.

The dual screen processor 102 of the control unit 100 renders the windows of the applications running in the multitasking environment to the main and auxiliary screens 112 and 114.

The dual screen processor 102 controls operations such that an application execution window rendered in the main screen 112 is moved to and displayed on the auxiliary screen 114 in accordance with the drag touch detected on the multitasking execution screen

If the execution termination signal for terminating the execution of a target application of which window is rendered in the main screen 112 is detected, the dual screen processor 102 closes the execution window of the target application and moves the application execution window rendered in the auxiliary screen 114 to the main screen 112.

If the execution terminal signal for terminating the execution of the application of which window is rendered in the auxiliary screen 114 is detected, the dual screen processor 102 closes the application execution window rendered in the auxiliary screen 114.

The dual screen processor 102 can switch the positions of the application execution windows between the main screen 112 and the auxiliary screen 114 in accordance with the drag touch signal corresponding to the drag touch event detected on the auxiliary screen 114.

The dual screen processor 102 splits the screen of the display unit 110 into the main screen 112 and the auxiliary 114 and renders the windows of the applications running concurrently to the designated main and auxiliary screens 112 and 114 in accordance with the double click signal corresponding to a double click touch event detected on the multitasking execution screen.

The dual screen processor 102 selects an application and displays the execution window of the selected application on one of the main and auxiliary screens 112 and 114 in accordance with an input signal corresponding to a touch event detected on the multitasking execution screen for selecting one of the applications running currently and displaying the execution window of the selected application on one of the main and auxiliary screens 112 and 114.

The dual screen processor 102 receives, from the control unit 100, the signal for terminating the execution of one of applications of which windows are displayed on the main and auxiliary screens 112 and 114. When the execution window of the application indicated by the execution termination signal is rendered in the main screen 112, the dual screen processor 102 closes the application execution window rendered in the main screen 112 and displays the application execution window rendered in the auxiliary screen 114 in the form of a full screen window.

When the execution window of the application indicated by the execution termination signal is rendered in the auxiliary screen 114, the dual screen processor 102 displays the application execution window rendered in the main screen 112 in the form of a full screen.

As described above, the mobile terminal having a touchscreen controls presentations of the windows of the applications running in the multitasking environment in accordance with the signals corresponding to touch events such as drag and double click detected on the touchscreen. The operations of the mobile terminal are described hereinafter with reference to drawings in more detail.

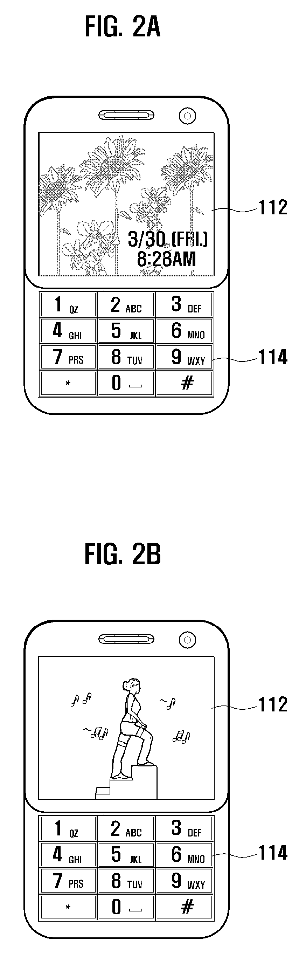

FIGs. 2A to 2K are diagrams illustrating display operations of a mobile terminal having two touchscreens in response to touch signals in multitasking environment according to an exemplary embodiment of the present invention.

Referring to FIGs. 2A to 2K, FIG. 2A shows the touchscreens of the mobile terminal operating in idle mode. In idle mode, the control unit 100 controls the display unit 110 to display idle mode screens providing operation status information with diverse indicators and icons such as a signal strength indicator, a battery level indicator, a current time indicator, a current date indicator, and application execution status icons. The display unit 110 of the mobile terminal is provided with a main screen 112 which displays the operation status information and an auxiliary screen 114 which provides a touch keypad in normal state and displays an application execution window in response to a specific touch input signal.

The control unit 100 executes a specific application in response to a user request. As shown in an exemplary case depicted in FIG. 2B, if a video playback application is requested by the user, the control unit 100 executes the video playback application and displays the execution window of the video playback application in the main screen 112. Although an application is activated in response to the user request in an exemplary embodiment of the present invention, it is not limited thereto. For instance, an application can be activated in response to a signal received from the outside.

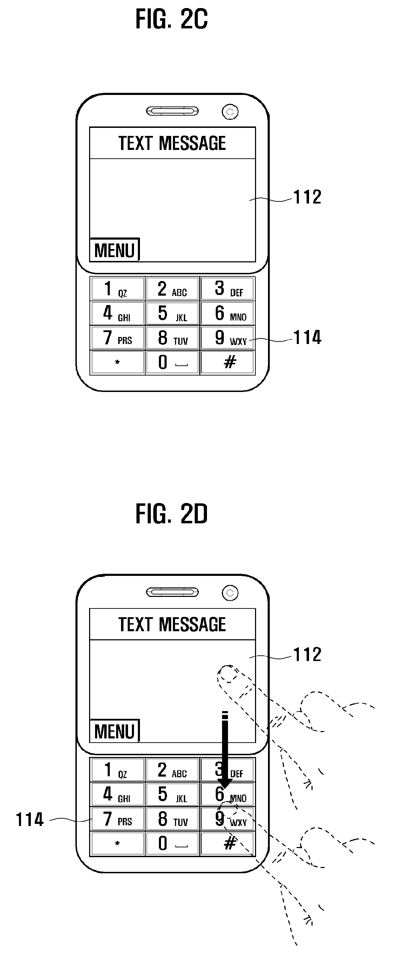

The control unit 100 can detect an execution signal requesting for execution of another application while the previously activated applications are running. That is, the control unit 100 can control the executions and operations of the multiple applications running in the multitasking environment. As shown in the exemplary case depicted in FIG.2C, if a user request for a text messaging application is detected while the video playback application is running, the control unit 100 controls the operation such that the display unit 110 renders the video playback application execution window, i.e. the execution window of the previously executed application, in the background of the main screen 112 and displays the text messaging application execution window, i.e. the execution window of the newly executed application, in the foreground of the main screen 112. At this time, although the video playback application execution window disappears from the main screen 112, the video playback application is running in the background rather than being terminated. The control unit 100 controls the operation such that the text messaging application execution window appears in the foreground of the main screen 112.

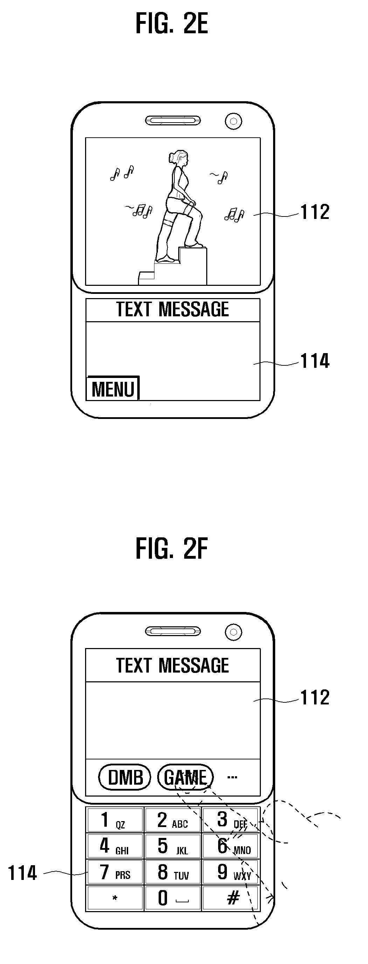

The control unit 100 performs a predetermined function in response to the touch signal input by means of a touch event detected on the touchscreen in the multitasking environment. As shown in the exemplary case depicted in FIG. 2D, if a drag signal corresponding to a drag touch starting from a position on the main screen 112 to a position on the auxiliary screen 114 is detected, the control unit 100 controls the operation such that the text messaging application execution window displayed in the foreground of the main screen 112 moves to the auxiliary screen 114. As shown in the exemplary case depicted in FIG. 2E, the control unit 100 displays the text messaging application execution window in the foreground of the auxiliary screen 114 and the video playback window in the foreground of the main screen 112.

If a double click signal is detected, the control unit 100 splits the main screen 112 into multiple sub-screens and displays the execution windows of the applications running concurrently in the corresponding sub-screens.

The control unit 100 can detect an executed application query signal corresponding to a touch event detected on the main screen 112. If the executed application query signal is detected on the main screen 112, the control unit 100 controls such that the application buttons representing the applications that are currently running are displayed in the main screen 112 as shown in FIG. 2F. The currently running applications include a video playback application, a game application, etc. By selecting one of the application buttons displayed on the main screen 112, the user can activate the execution window of the selected application in the foreground of the main screen 112. In the exemplary case depicted in FIG. 2F, the game application button is selected from the main screen 112.

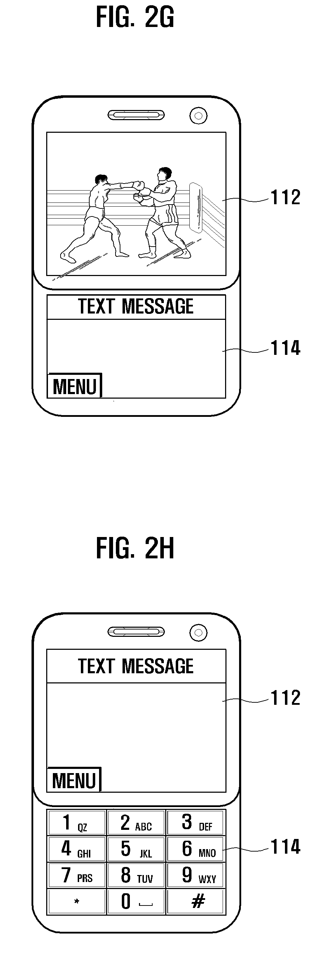

If the game application button is selected, the control unit 100 displays the execution window of the game application on the main screen 112 as shown in FIG. 2G.

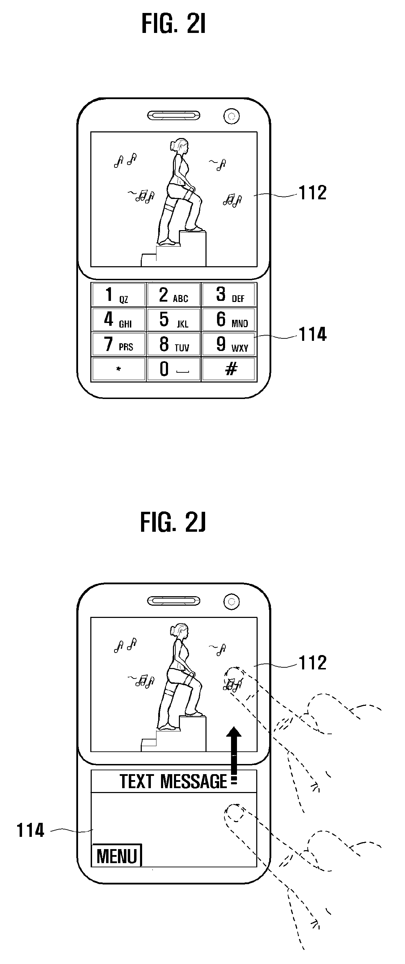

The control unit 100 can identify an execution termination signal for terminating the execution of one of applications corresponding to the main and auxiliary screens 112 and 114. As shown in the exemplary case depicted in FIG. 2H, if an execution termination signal is detected on the game application execution window displayed in the main screen 112, the control unit 100 controls operations such that the execution of the game application is terminated. After the application execution window disappears due to the termination of the game application, the control unit 100 controls operations such that the application execution window displayed in the auxiliary screen 114 (i.e., the previously running text messaging application execution window of FIG. 2G) is moved to be displayed on the main screen 112 as shown in FIG. 2H. At the same time with the movement of the text messaging application execution window to the main screen 112, the control unit 100 can control operations such that the touch keypad is activated to be display on the auxiliary screen 114 in order for the user to compose a text message in the text messaging application execution window displayed on the main screen 112. Or the control unit 100 can control operations such that running application in the background of the auxiliary screen 114 is displayed on the auxiliary screen 114 according to priority order.lf an execution termination signal for terminating the text messaging application of which application execution window is displayed on the main screen 112 is detected, the control unit 100 controls the operation such that the execution of the text messaging application is terminated and the previously running video playback application is displayed on the main screen 112 as shown in FIG.2I.

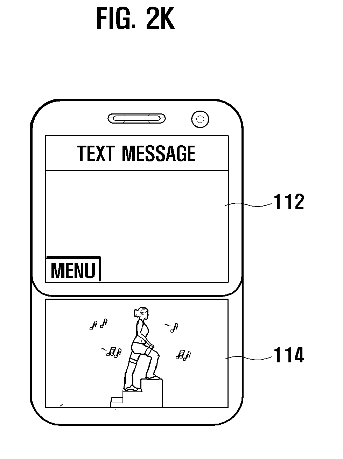

The control unit 100 can identify the drag signal corresponding to the drag touch starting from the auxiliary screen 114 to the main screen 112 while the main and auxiliary screens 112 and 114 display the respective application execution windows. In an exemplary case depicted in FIG. 2J, the control unit 100 detects the drag signal corresponding to the drag event starting from the auxiliary screen 114, displaying the text messaging application execution window, to the main screen 112, displaying the video playback application execution window. Upon detection of the drag signal, the control unit 100 controls the operation such that the application execution windows are switched between the main and auxiliary windows 112 and 114. As a result of the application execution windows change, the text messaging application execution window is displayed on the main screen 112, and the video playback application execution window is displayed on the auxiliary screen 114 as shown in FIG. 2K. In order for the user to compose a text message in the text messaging application execution window displayed on the main screen 112, the control unit 100 can control operations such that the video playback application execution window disappears and the touch keypad is activated on the auxiliary screen 114.

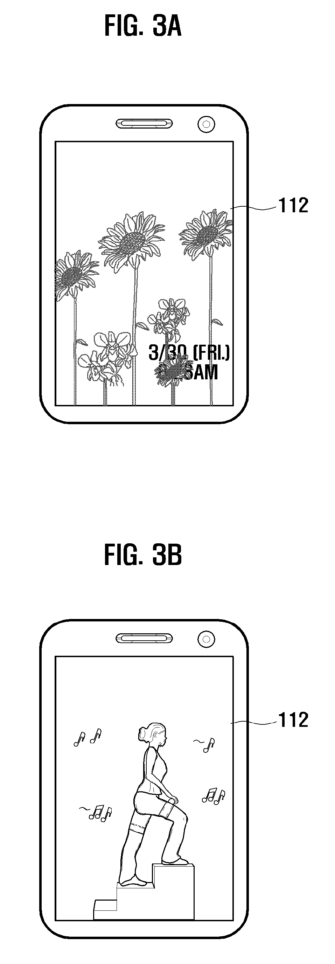

FIGs. 3A to 3I are diagrams illustrating display operations of a mobile terminal having a single touchscreen in response to touch signals in multitasking environment according to an exemplary embodiment of the present invention.

Referring to FIGs. 3A to 3I, FIG. 3A shows a touchscreen of the mobile terminal operating in idle mode. In idle mode, the control unit 100 controls the display unit 110 to display an idle mode screen providing operation status information with diverse indicators and/or icons such as a signal strength indicator, a battery level indicator, a current time indicator, a current date indicator, and application execution status icons. In case that the mobile terminal is provided with one touchscreen, the control unit 100 splits the screen into a main screen 112 and an auxiliary screen 114 for displaying multiple application execution windows in response to a multitasking execution request.

The control unit 100 executes a specific application in response to a user request. As shown in an exemplary case depicted in FIG. 3B, if a video playback application request signal is detected, the control unit 100 executes the video playback application with the display of the video playback application execution window on the screen of the display unit 110. Although an application is activated in response to the user request in an exemplary embodiment of the present invention, it is not limited thereto. For instance, an application can be activated in response to a signal received from an outside source.

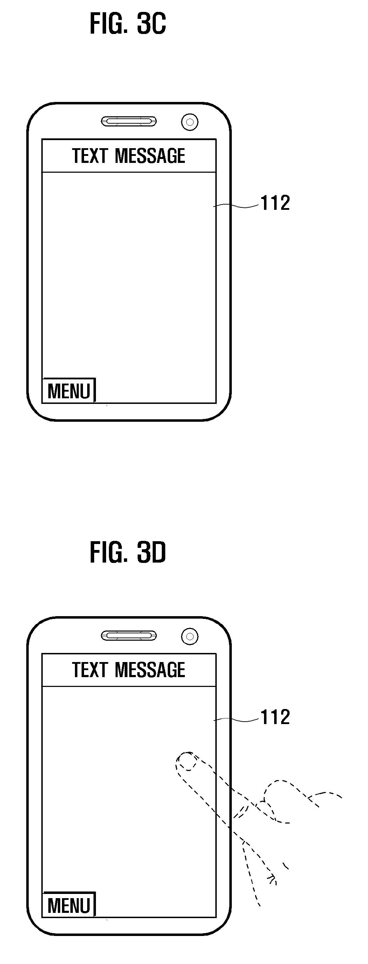

The control unit 100 can detect an execution signal requesting execution of another application while the previously activated applications are running. That is, the control unit 100 can control the executions and operations of the multiple applications running in the multitasking environment. If an application (e.g. the text messaging application) is executed while the previously executed application (e.g. the video playback application) is running, the control unit 100 controls the operation such that the previously executed application (the video playback application) is running in the background and the newly executed application (the text messaging application) is running in the foreground with the display of its application execution window on the screen as shown in FIG. 3C. Although the video playback application execution window disappears, the video playback application is maintained in a running state in the background rather than being terminated. The control unit 100 controls the operation such that the text messaging application execution window is displayed in the foreground of the screen.

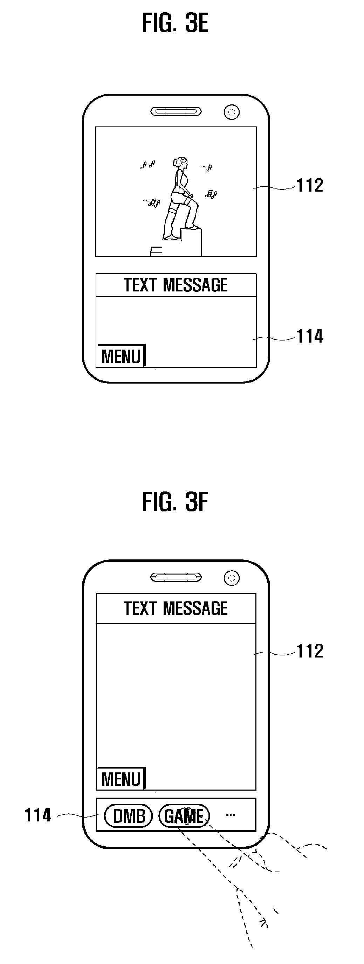

The control unit 100 performs a predetermined function in response to the touch signal input by means of a touch event detected on the touchscreen in the multitasking environment. If a double click signal corresponding to a double click touch event detected on the touchscreen as shown in FIG. 3D, the control unit 100 splits the touchscreen into a main screen 112 and an auxiliary screen 114 as shown in FIG. 3E.

In the exemplary case depicted in FIG. 3E, the control unit 100 controls the display unit 110 to display the execution window of the text messaging application runningin the background on the auxiliary screen 114 and the execution window of the video playback application running in the foreground on the main screen 112.

The control unit 100 can detect an executed application query signal corresponding to a touch event detected on the touchscreen for displaying buttons representing the applications that are currently running. If the executed application query signal is detected, the control unit 100 controls the operation such that application buttons representing the currently running applications, such as the video playback application, game application, etc., are displayed in the auxiliary screen 114 as shown in FIG. 3F. The user can select one of the currently running applications by touching the corresponding application button on the auxiliary screen 114. In the exemplary case depicted in FIG. 3F, the game application button is selected on the auxiliary screen 114.

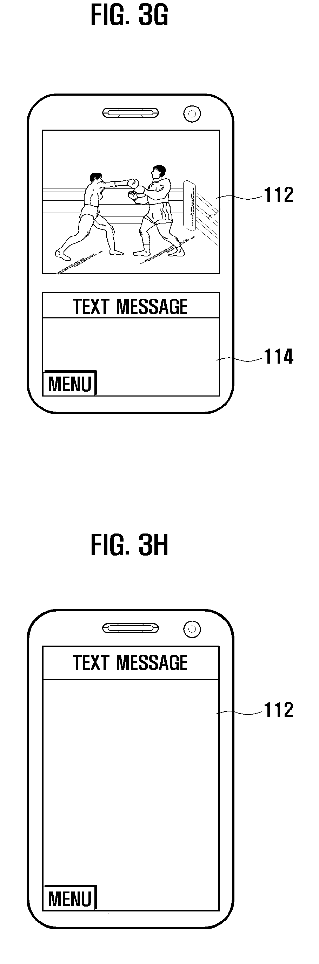

If the game application is selected by touching the corresponding button on the auxiliary screen 114 as shown in FIG. 3F, the control unit 100 controls the operation such that the text messaging application execution window displayed in the main screen moves to the auxiliary screen 114 and the game application execution window is displayed in the main screen 112 as shown in FIG. 3G. In an exemplary embodiment of the present invention, when the text messaging application of which window is displayed in the auxiliary screen 114 is activated in response to a touch signal, the control unit 100 can control the operation such that the text messaging application execution window is displayed in the main screen 112 together with the touch keypad displayed in the auxiliary screen 114.

The control unit 100 can detect an execution termination signal corresponding to a touch event detected on the touchscreen for terminating the execution of one of the applications of which application execution windows are displayed in the main and auxiliary screens 112 and 114. For instance, if an execution termination signal for terminating the execution of the video playback application is detected, the control unit 100 controls such that the execution of the video playback application is terminated with the close of the video playback application execution window displayed in the main screen 112 and the main and auxiliary screens 112 and 114 are recovered into the single touchscreen having a full screen text messaging application execution window as shown in FIG. 3H.

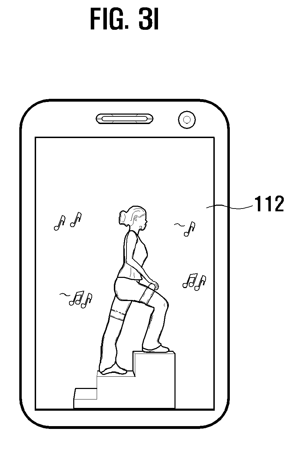

In the meantime, if an execution termination signal for terminating the execution of the text messaging application is detected, the control unit 100 controls such that the execution of the text messaging application with the close of the text messaging application execution window displayed in the auxiliary screen 114 and the main and auxiliary application screens 112 and 114 are recovered into the signal touchscreen having a full screen video playback application execution window as shown in FIG. 3I.

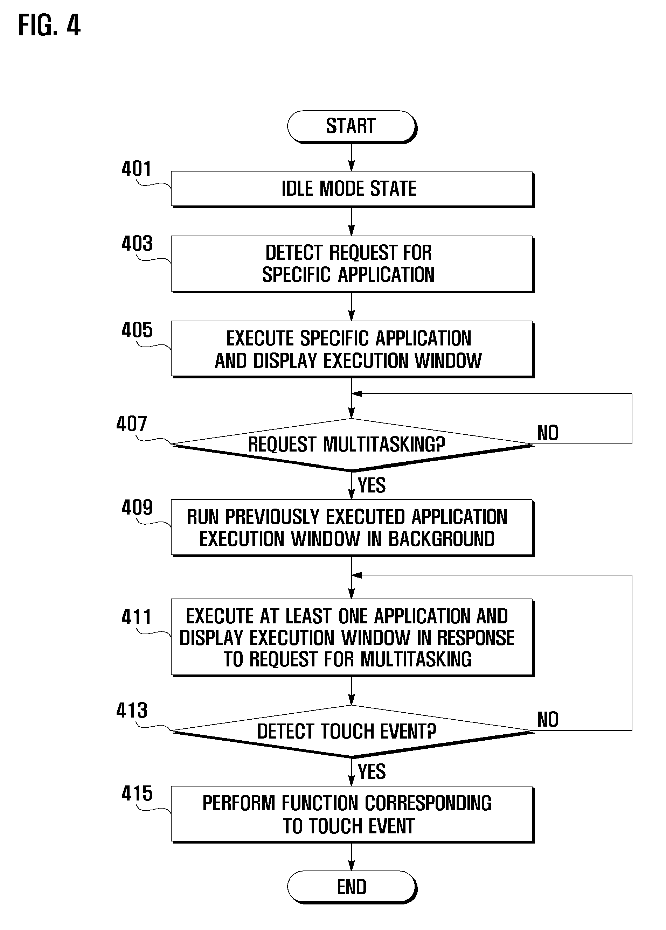

FIG. 4 is a flowchart illustrating a method for controlling display operations of a touchscreen-enabled mobile terminal operating in a multitasking environment in response to touch events detected on the touchscreen.

Referring to FIG. 4, the control unit 100 controls such that the mobile terminal operates in idle mode while monitoring to detect a request for executing an application (401).

The control unit 100 detects an execution request signal for a specific application (403). If the execution request signal input by the user is detected, the control unit 100 executes the requested application and displays the execution window of the executed application in the screen of the display unit 110 (405). The application can be any of a text messaging application, a video playback application, a wireless Internet access application, a game application, and a Digital Multimedia Broadcasting (DMB) application or other similar types of application which may be related to business operations, productive operations, time management operations, etc . The control unit 100 controls the execution of the specific application in response to the user input signal. Although the application is executed in response to the user request in an exemplary embodiment of the present invention, it is not limited thereto but can be activated in response to a signal received from an external source..

While the requested application is running, the control unit 100 determines whether an execution request signal for another application is input (407). If an execution request signal for another application is detected, the control unit 100 controls such that the previously executed application is running in the background. For instance, if an application (such as a camera application, a text messaging application, and phonebook application) is requested while the video playback application is running, the control unit 100 controls the operation such that the video playback application execution window is rendered in the background (409). That is, the control unit 100 executes multiple applications requested by the user in the multitasking environment and displays the application execution windows on the screen of the display unit 110.

In case that there is no request for executing another application, the control unit 100 continues monitoring to detect an execution request signal.

After step 409, the control unit 100 displays the application execution window of at least one executed application in the screen of the display unit 110 (411). The control unit 100 controls the functions of the at least one currently running application in response to the user request. That is, the control unit 100 controls such that the execution window of the currently running application is displayed in the foreground. For instance, the control unit 100 can control the operation such that the text messaging application execution window is displayed while the video playback application is running in the background. At this time, the control unit 100 renders the video playback application execution window in the background without terminating the execution of the video playback application.

While running the executed applications in the multitasking environment, the control unit 100 monitors the touch screen to determine presence of a touch signal corresponding to a touch event occurred on the multitasking screen (413). If a touch signal is detected, the control unit 100 performs a function indicated by the touch signal. The touch signal can be any of a drag signal, a double click signal, a flick signal, a flit signal, and a swing signal. Although the drag signal and double click signals are described in association with the display operations in an exemplary embodiment of the present invention, there can be various touch signals defined for display operations. If a double click signal is detected at step S413, the control unit 100 controls the operation such that the screen of the display unit 110 is split into a main screen 112 and an auxiliary screen 114 (415). The control unit 100 can move the application execution window in the screen in accordance with the drag signal. Here, the windows of the currently running applications are displayed in the main and auxiliary screens 112 and 114 designated for respective applications.

If no touch signal is detected at step 413, the process goes to step S411 to continue running the applications while displaying application execution windows.

Until now, the display operations of the touchscreen of the mobile terminal in the multitasking environment are schematically described. The display operations of the mobile terminals having one touchscreen and two touchscreens according to exemplary embodiments of the present invention, in response to the touch events, are described hereinafter in more detail.

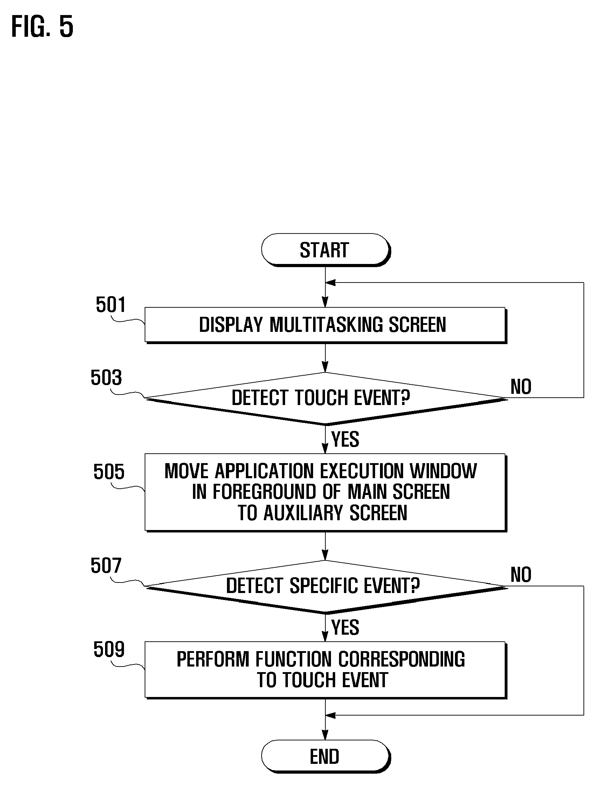

FIG 5 is a flowchart illustrating a method for controlling display operations of a mobile terminal having dual touchscreens in response to a touch signal input through the touchscreens according to an exemplary embodiment of the present invention.

Referring to FIG. 5, the control unit 100 controls the operation such that a multitasking execution window for the multiple applications running concurrently is displayed in a main screen 112 (501). While displaying the multitasking execution window, the control unit 100 monitors to detect a touch event on the main screen 112 for selecting one of the concurrently running applications. If an application is selected by the touch event, the control unit 100 activates the execution window of the selected application in the foreground and deactivates the windows of the other applications in the background. For instance, the control unit 100 activates the text messaging application to display the text messaging application execution window in the foreground while rendering the video playback application execution window in the background in response to a user request as shown in FIG. 2C.

While the multitasking execution window is displayed, the control unit 100 monitors the presence oft a touch signal corresponding to a touch event occurred on the touchscreen (503). In FIG. 5 it is assumed that the touch signal is a drag signal corresponding to a drag event. However, the touch signal is not limited thereto but may be the signal mapped to one of various touch events.

If a drag signal is detected at step 503 that indicates movement from the main screen 112 to the auxiliary screen 114, the control unit 100 controls the operation such that the execution window of the application targeted by the drag signal moves from the main screen 112 to the auxiliary screen 114 and another application execution window is displayed in the main screen 112. For instance, the control unit 100 moves the execution window of the text message application from the foreground of the main screen 112 to the foreground of the auxiliary screen 114 and brings the execution window of the video playback application from the background to the foreground of the main screen 112 as shown in FIG. 2E. The control unit 100 can be recovered according to a priority order of previously running applications at the main screen 112.

Next, the control unit 100 determines whether a touch signal corresponding to a touch event detected on the touchscreen is input (507). If a touch signal is input, the control unit 100 executes a function corresponding to the touch signal (509). In an exemplary embodiment of the present invention, the touch signal can correspond to a touch event for selecting one of application buttons representing the applications running concurrently as shown in FIG. 2F. The application buttons can be displayed in response to an executed application query signal input by the user. The applications mapped to the application buttons include the video playback application, game application, etc. If one of the application buttons is selected, the control unit 100 activates the application corresponding to the button and displays the execution window of the application in the main screen 112.

The touch signal also can correspond to a touch event for terminating the execution of one of applications of which execution windows are displayed in the main and auxiliary screens 112 and 114. For instance, if an execution termination signal targeting the game application is detected while the execution window of the game application is displayed in the foreground of the main screen 112 and the execution window of the text messaging application is displayed in the foreground of the auxiliary screen 114, the control unit 100 controls the operation such that the execution window of the game application is closed and the text messaging application execution window moves from the auxiliary screen 114 to the foreground of the main screen 112 as shown in FIG. 2H. At this time, the touch keypad is displayed in the auxiliary screen 114 on behalf of the execution window of the text messaging application in order for the user to compose a text message in the text messaging application execution window displayed on the main screen 112. Or running application in the background of the auxiliary screen 114 is displayed on the auxiliary screen 114 according to priority order. The touch signal also can correspond to a touch event for terminating the text messaging application of which execution window is displayed in the main screen 112. If the execution termination signal targeting the text messaging application, the control unit 100 terminates the execution of the text messaging application such that the text messaging application execution window is closed and the video playback application execution window is brought in the main screen 112 as shown in FIG. 2I.

The touch signal also can correspond to a drag touch event starting from the auxiliary screen 114 to the main screen 112. If a drag signal corresponding to the drag event starting the auxiliary screen 114 to the main screen 112 is detected, the control unit 100 controls the operation such that the application execution windows displayed in the main and auxiliary screens 112 and 114 are switched with each other. For instance, if the drag signal is detected with the text messaging application execution window in the auxiliary screen 114 and the video playback application execution window in the main screen 112 as shown in FIG. 2J, the control unit 100 controls the operation such that the text messaging application execution window moves to the main screen 112 and the video playback application execution window moves to the auxiliary screen 114.

If no touch signal is detected at step 507, the control unit 100 skips the touch-event driven function execution step 509 and ends the process.

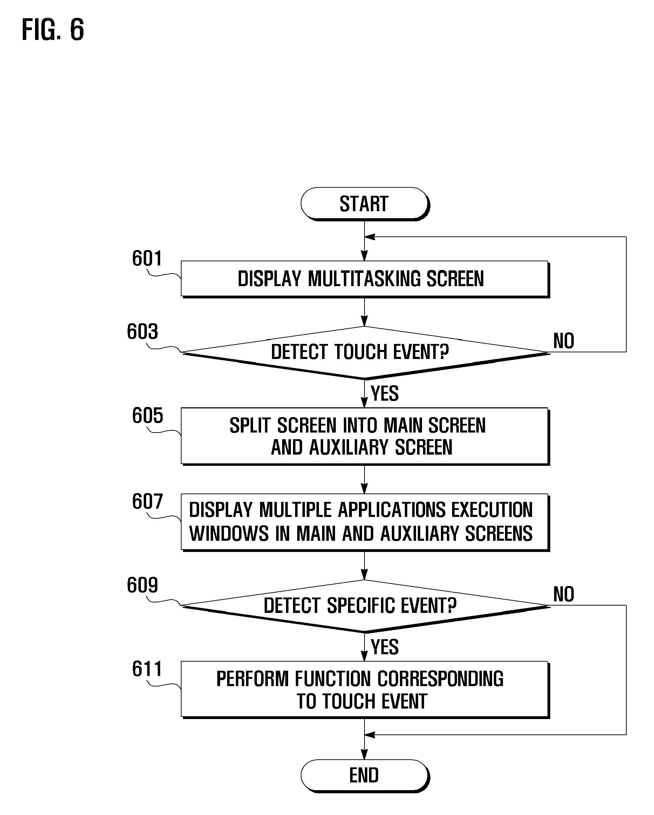

FIG. 6 is a flowchart illustrating a method for controlling display operations of a mobile terminal having a touchscreen in response to a touch signal input through the touchscreen according to another embodiment of the present invention.

Referring to FIG. 6, the control unit 100 controls the operation such that a multitasking execution window is displayed in the screen of the display unit 110 (601). In the multitasking environment in which multiple applications are running concurrently, the control unit 100 controls the operation such that all the applications are running in the background except for the most recently activated application running in the foreground. For instance, if a user request for activating the text messaging application is detected while the video playback application execution window is displayed in the foreground of the screen (see FIG. 3B), the control unit 100 controls the operation such that the video playback application execution window goes to the background and the text messaging application execution window appears in the foreground of the screen as shown in FIG 3C.

In FIG. 6, the control unit 100 detects a touch signal corresponding to a touch event occurred on the touchscreen (603). While the multitasking execution window is displayed, the control unit 100 monitors the touchscreen for the presence of a touch signal corresponding to a touch event (603). In FIG. 6, it is assumed that the touch signal is a double click signal corresponding to a double click event on the touch screen. However, the touch signal is not limited thereto but may be the signal mapped to one of various touch events.

If a double click signal is detected at step 603, the control unit 100 controls the display unit 110 to split the screen into the main screen 112 and the auxiliary screen 114 (605).

Next, the control unit 100 activates the application running in the background such that the activated application execution window is displayed in the main screen 112 and the application execution window currently being displayed in the full screen mode is placed in the, now split, auxiliary screen 114 (607). For instance, if a double click signal is detected while the text messaging application execution window is displayed in the form of a full screen (see FIG. 3D) with the video playback application running in the background, the control unit 100 splits the screen into a main and auxiliary screen 112 and 114, respectively, and displays the video playback application execution window in the main screen 112 and the text messaging application execution window in the auxiliary window 114 as shown in FIG. 3e.

While the two application execution windows are displayed in the main and auxiliary screens 112 and 114 respectively, the control unit 100 determines whether a touch signal is detected (609). If a specific touch signal is detected, the control unit 100 executes a function corresponding to the touch signal (611). The touch signal can correspond to a touch event for selecting one of application buttons representing the applications running currently as shown in FIG. 3F. The application buttons can be displayed in response to an executed application query signal input by the user. The applications mapped to the application buttons include the video playback application, game application, etc. If one of the application buttons is selected, the control unit 100 activates the application mapped to the application button and displays the execution window of the selected application in the main screen 112. In the exemplary case depicted in FIG. 3F, the game application button is selected such that the game application execution window is displayed in the main screen 112 as shown in FIG. 3G.

The touch signal also can correspond to a touch event for terminating the execution of one of the applications of which execution windows are displayed in the main and auxiliary screens 112 and 114. For instance, if an execution termination signal for terminating the application of which execution window is displayed in the main screen is detected while the game application execution window is displayed in the main screen 112 and the text messaging application execution window is displayed in the auxiliary screen 114 (see FIG. 3G), the control unit 100 terminates the game application and displays the text messaging application execution window in full screen mode as shown in FIG. H.

The touch signal also can correspond to a touch event for terminating the execution of the application of which execution window is displayed in the auxiliary screen 114. If an execution termination signal for terminating the application of which execution window is displayed in the auxiliary screen 114 while the video playback application execution window is displayed in the main screen 112 and the text messaging application execution window is displayed in the auxiliary screen 114, the control unit 100 terminates the text messaging application and displays the video playback application execution window in full screen mode as shown in FIG. 3I.

If no touch signal is detected at step 609, the control unit 100 skips the touch-event driven function execution step S611 and ends the process.

Although exemplary embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

As described above, the method and apparatus for controlling the multitasking operation of a mobile terminal having at least one touchscreen according to the present invention enables controlling the operations of multiple applications running concurrently in the multitasking environment based on the touch events detected on the at least one touchscreen intuitively, resulting in improvement of multitasking functionality and user convenience.

## Claims

1. A method for controlling multitasking operations of a mobile terminal having at least one touchscreen, **characterized by**:
executing an application in response to a user request while at least one other application is currently running;
displaying an execution window of an application selected from the currently running applications in an auxiliary screen in response to a touch event detected on the touchscreen; and
displaying the execution screens of the applications running concurrently, except for the application whoseexecution window is displayed in the auxiliary screen, in a main screen accumulatively.

2. The method of claim 1, further **characterized by**:
splitting, when the at least one touchscreen includes a single touchscreen, the touch screen into the main screen and the auxiliary screen; and
displaying one of the execution windows in the auxiliary screen in response to a touch event, the touch event being one of a drag event, a double click event, a flick event, and a flit event.

3. The method of claim 2, wherein displaying one of the execution windows in the auxiliary screen comprises moving the execution window displayed in a foreground of the main screen to the auxiliary window in response to the touch event.

4. The method of claim 2, wherein displaying one of the execution windows in the auxiliary screen comprising switching the execution windows displayed in the main and auxiliary screens each other in response to the touch event detected on the auxiliary screen.

5. The method of claim 2, further comprising splitting the main screen into multiple sub-screens and displaying execution windows of the applications in the corresponding sub-screens in response to the touch event detected on the main screen.

6. The method of claim 2, further **characterized by**::
detecting an execution termination event for terminating one of the applications of which execution windows are displayed in the main and auxiliary screens;
terminating the application targeted by the execution termination event;
displaying the execution window of the most recently activated application in the main screen among the applications running in the back ground; and
closing the application execution window displayed in the auxiliary screen.

7. The method of claim 1, further **characterized by**:
designating, when the at least one touchscreen includes dual touchscreens, a first touch screen as the main screen and a second touchscreen as the auxiliary screen;
resizing the execution window of the most recently activated application in the non-split touchscreen to be appropriate for the auxiliary screen;
displaying the resized execution window of the most recently activated application in the auxiliary screen;
resizing the execution window of the next most recently activated application in the non-split touchscreen appropriate for the main screen; and
displaying the resized execution window of the next most recently activated application in the main screen.

8. The method of claim 7, further **characterized by**::
detecting an execution termination event for terminating one of the applications of which execution windows are displayed in the main and auxiliary screens;
closing the execution window of the application targeted by the execution termination event;
recovering the main and auxiliary screens into the non-split touchscreen; and
displaying the execution window of the most recently activated application among the currently running applications in the non-split touchscreen.

9. An apparatus for controlling multitasking operations of a mobile terminal having at least one touchscreen, **characterized by**::
a display unit which provides at least one touchscreen for displaying execution windows of multiple applications running concurrently; and
a control unit which controls the display unit to define a main screen for displaying execution windows of the multiple applications except for the most recently activated application and an auxiliary screen for displaying an execution window of the most recently activated application in response to a touch event detected on the touchscreen.

10. The apparatus of claim 9, further **characterized by**:
a dual screen processor which designates, when the at least one touchscreen includes a single touchscreen, a first touchscreen as the main screen and a second touchscreen as the auxiliary screen in response to a touch event, the touch event being one of a drag event, a double click event, a flick event, and a flit event detected on the touchscreen and designates the main and auxiliary screens for the execution windows of the applications; and splits, when the at least one touchscreen includes dual touchscreen, the touchscreen into the main screen and the auxiliary screen in response to the touch event.

11. The apparatus of claim 9, wherein the control unit moves the execution window of the application displayed in the main screen to the auxiliary screen in response to the touch event, switches, when a touch event is detected on the auxiliary screen, the execution windows displayed in the main and auxiliary screens with each other, and splits, when a touch event is detected on the main screen, the main screen into a plurality of sub-screens for displaying the execution windows of the applications designated to the main screen respectively.

12. The apparatus of claim 9, wherein the control unit terminates, when a touch event for terminating one of the applications of which execution windows are displayed on the main and auxiliary screens is detected, the application targeted by the touch event, displays the execution window of the most recently activated application except for the terminated application in the main screen, and deactivates the execution window displayed in the auxiliary screen.

13. The apparatus of claim 9, wherein the control unit runs, when a new application is executed, the previously executed application in a background mode.

14. The apparatus of claim 9, wherein the control unit splits, when a touch event is detected on the touch screen, the touchscreen into the main screen and the auxiliary screen, resizes the execution window of the most recently activated application designated to the touchscreen to be appropriate for the auxiliary screen, and displays the resized execution window of the most recently activated application in the auxiliary screen, resizes the execution window of the next most recently activated application designated to the touchscreen appropriate for the main screen, and displays the resized execution window of the next most recently activated application in the main screen.

15. The apparatus of claim 14, wherein the control unit terminates, when an execution termination event for terminating one of the applications whose execution window is displayed in the main and auxiliary screens is detected, the application targeted by the execution termination event, recovers the main and auxiliary screens into the touchscreen, and displays the execution window of the most recently activated application among the currently running applications in the touchscreen.
